# FASCICULE DE BREVET EUROPEEN

(11) **EP 1 916 751 B1**
(45) Date de publication et mention de la délivrance du brevet: **22.04.2009**
(21) Numéro de dépôt: 07291287.6
(22) Date de dépôt: 23.10.2007
(51) Int. Cl.: H02G 3/12

(54) **Dispositif de montage pour appareillage électrique, incluant une boîte d'encastrement**
Vorrichtung zum Montieren eines elektrischen Geräts, z. B. einer Unterputzdose
Device for mounting an electric apparatus, e. g. a distribution box

(30) Priorité: 26.10.2006 FR 0609426
(43) Date de publication de la demande: 30.04.2008
(73) Titulaire: LEGRAND FRANCE, 87000 Limoges (FR); LEGRAND SNC, 87000 Limoges (FR)
(72) Inventeur: Guillaume, Jean-Noël, 87290 Saint Amand Magnazeix (FR)
(74) Mandataire: Bentz, Jean-Paul

(56) Documents cités:
- DE-A1- 19 814 567
- US-A- 1 818 317
- US-A- 2 971 666
- US-A1- 2002 104 672

## Description

L'invention concerne, de façon générale, les techniques permettant d'encastrer à demeure un appareillage électrique dans un logement pratiqué dans une paroi dure, par exemple une paroi en briques, en plaques de plâtre, ou en carreaux de plâtre.

Plus précisément, l'invention concerne un dispositif de montage pour appareillage électrique, ce dispositif comprenant une boite d'encastrement destinée à être insérée dans un logement, et des moyens de fixation propres à assurer un ancrage de la boîte dans le logement, cette boîte comprenant au moins un fond et une paroi latérale se raccordant au fond et s'étendant autour d'un axe central, les moyens de fixation comprenant au moins un premier volet et des moyens de sollicitation, le premier volet présentant une face interne appliquée sur une face externe de la paroi latérale de la boîte dans un état de repos du dispositif, et un bord lié monté pivotant sur cette paroi, et les moyens de sollicitation faisant sélectivement pivoter le premier volet, en réponse à un déclenchement du dispositif, dans un sens propre à éloigner de l'axe central un bord libre de ce premier volet.

Un dispositif de ce type est par exemple décrit dans le document de brevet US 2 971 666, un dispositif voisin étant décrit dans le document de brevet US 2002/0104672.

Dans ce contexte, l'invention a pour but de proposer un dispositif dont l'emploi soit encore plus aisé et dont les performances d'ancrage soient encore meilleures.

A cette fin, le dispositif de l'invention, par ailleurs conforme à la définition générique qu'en donne le préambule ci-dessus, est essentiellement caractérisé en ce que les moyens de sollicitation comprennent une substance de scellement qui, dans l'état de repos du dispositif, est confinée dans la boite et qui, au déclenchement du dispositif, est sélectivement projetée sous pression sur la face interne du premier volet.

Pour ce faire, la paroi de la boite présente par exemple une ouverture en regard de la face interne du premier volet, de sorte qu'au déclenchement du dispositif, la substance de scellement est canalisée pour traverser l'ouverture.

Dans le mode de réalisation préféré de l'invention, il est possible de prévoir que le dispositif de l'invention comprenne un deuxième volet appliqué sur le premier volet dans l'état de repos du dispositif, formant avec le premier volet une première paire de volets, et présentant un bord lié et un bord libre, que le bord lié de chacun des premier et deuxième volets soit relativement distant du bord lié et relativement proche du bord libre de l'autre volet dans l'état de repos du dispositif, et que le deuxième volet soit monté pivotant sur la paroi latérale de la boite par son bord lié, parallèlement au bord lié du premier volet, le pivotement du deuxième volet résultant du pivotement du premier volet et de l'appui du premier volet sur ce deuxième volet, et le bord libre du deuxième volet présentant un rebord formant butée pour le bord libre du premier volet.

Chaque volet présente, à distance du fond de la boîte, un bord frontal qui peut s'étendre obliquement, depuis le bord lié de ce volet jusqu'au bord libre de ce volet, en se rapprochant du fond de cette boîte, et qui peut être conformé en gradins.

Le dispositif de l'invention peut comprendre une deuxième paire de volets, conformée comme la première paire de volets et diamétralement opposée à celle-ci par rapport à l'axe central, ou même plusieurs paires de volets complémentaires.

La substance de scellement est par exemple constituée par une mousse expansive, auquel cas le dispositif de l'invention peut comprendre une cartouche de mousse disposée dans le fond de la boîte et au moins reliée à ladite ouverture par un canal propre, au déclenchement de ce dispositif, à guider à travers l'ouverture la mousse expansive délivrée par la cartouche en réponse à un déclenchement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un dispositif conforme à l'invention, illustré dans son état de repos;
- la figure 2 est une autre vue en perspective du dispositif illustré à la figure 1, représenté dans son état déclenché; et
- la figure 3 est une vue en perspective des moyens de sollicitation équipant le dispositif illustré aux figures 1 et 2, ces moyens étant représentés dans l'état qu'ils adoptent après déclenchement du dispositif.

Comme annoncé précédemment, l'invention concerne un dispositif de montage pour appareillage électrique, ce dispositif comprenant une boîte d'encastrement 1 et des moyens de fixation qui seront détaillés ultérieurement.

La boîte d'encastrement 1, qui est destinée à être insérée dans un logement pratiqué dans une cloison murale par exemple, comprend un fond 10, une paroi latérale 11, et un rebord 12 venant en appui sur le bord du logement.

La paroi latérale 11 se raccorde au fond 10 de cette boîte 1 et s'étend autour de l'axe central Z.

Selon l'invention, les moyens de fixation, dont la fonction est d'assurer un ancrage de la boîte 1 dans le logement, comprennent notamment un volet 21 et des moyens de sollicitation 3.

Le volet 21 présente une face interne qui, dans un état de repos du dispositif, est appliquée sur la face externe de la paroi latérale 11 de la boîte 1, et un bord lié 211 qui est monté pivotant sur cette paroi 11.

Les moyens de sollicitation 3 ont pour fonction de faire sélectivement pivoter le volet 21, en réponse à un déclenchement du dispositif, dans un sens propre à éloigner de l'axe central Z le bord libre 212 de ce volet 21, c'est-à-dire le bord opposé au bord lié 211.

Ces moyens peuvent revêtir de nombreuses formes et notamment être constitués d'un ou plusieurs ressorts précontraints en compression et libérés, lors du déclenchement du dispositif, pour actionner au moins le volet 21.

Néanmoins, dans le mode de réalisation préféré de l'invention, ces moyens de sollicitation 3 comprennent une substance de scellement 30 propre à opérer un ancrage chimique, en plus de l'ancrage mécanique que réalise le déploiement du volet 21 à l'intérieur du logement dans lequel est insérée la boîte 1.

Cette substance de scellement, qui est confinée à l'intérieur de la boîte 1 dans l'état de repos du dispositif, est projetée sous pression sur la face interne du volet 21 lors du déclenchement de ce dispositif, et provoque ainsi le pivotement du volet 21 autour de son bord lié 211.

Plus précisément, la substance de scellement 30 peut être constituée par une mousse expansive, telle qu'une mousse polyuréthane, cette mousse étant, dans l'état de repos du dispositif, contenue dans une cartouche 31 elle-même disposée dans le fond 10 de la boîte 1.

La cartouche de mousse 31 comporte par exemple un bouton B dont l'enfoncement provoque l'expulsion de la mousse.

Cette cartouche 31 est reliée, par l'intermédiaire d'un canal 32, à une ouverture 110 pratiquée dans la paroi 11 en regard de la face interne du volet 21.

Grâce à cet agencement, la mousse expansive 30 qui est délivrée sous pression par la cartouche 31 en réponse au déclenchement du dispositif, c'est-à-dire à l'enfoncement du bouton B, et qui est guidée par le canal 32, traverse l'ouverture 110 de la paroi 11 et ouvre le volet 21.

L'effort exercé par la mousse sur le volet 21 peut être renforcé en prévoyant un deuxième volet 22 qui, en combinaison avec le premier volet 21, permet de délimiter partiellement l'espace occupé par la mousse 30 expulsée de la cartouche 31.

Le volet 22, qui forme avec le volet 21 une paire de volets 201, est appliqué sur le volet 21 dans l'état de repos du dispositif, et présente lui aussi un bord lié 221 et un bord libre 222, le bord lié 221 de ce deuxième volet 22 étant monté pivotant sur la paroi latérale 11 parallèlement au bord lié 211 du volet 21.

Les volets 21 et 22 sont disposés de façon telle que, dans l'état de repos du dispositif, le bord lié 211 du volet 21 est relativement distant du bord lié 221 du volet 22 et relativement proche du bord libre 222 de ce volet 22, et que, de façon symétrique, le bord libre 212 du volet 21 est relativement distant du bord libre 222 du volet 22 et relativement proche du bord lié 221 de ce volet 22.

De cette façon, le pivotement du deuxième volet 22 résulte à la fois du pivotement du volet 21 provoqué par la pression de la mousse, et de l'appui du volet 21 sur ce deuxième volet 22.

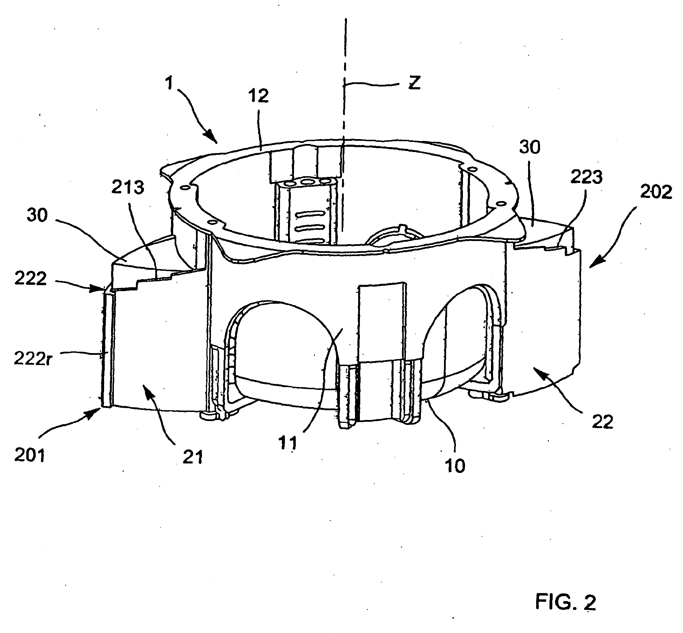

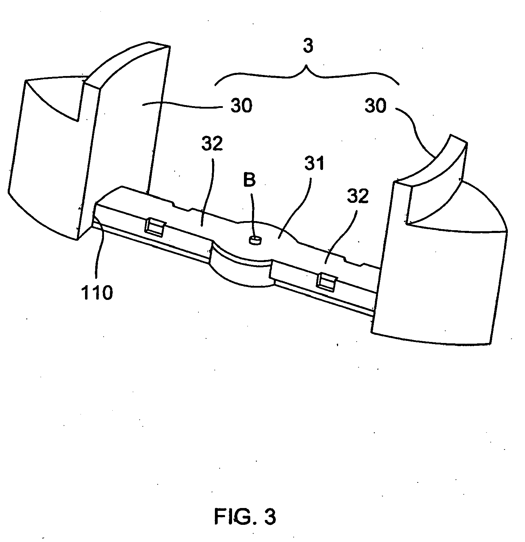

Pour confiner la mousse 30 au volume illustré à la figure 3, le bord libre 222 du deuxième volet 22 peut présenter un rebord 222r (figure 2) qui forme butée pour le bord libre 212 du premier volet 21, et qui définit donc l'ouverture maximale possible du premier volet 21.

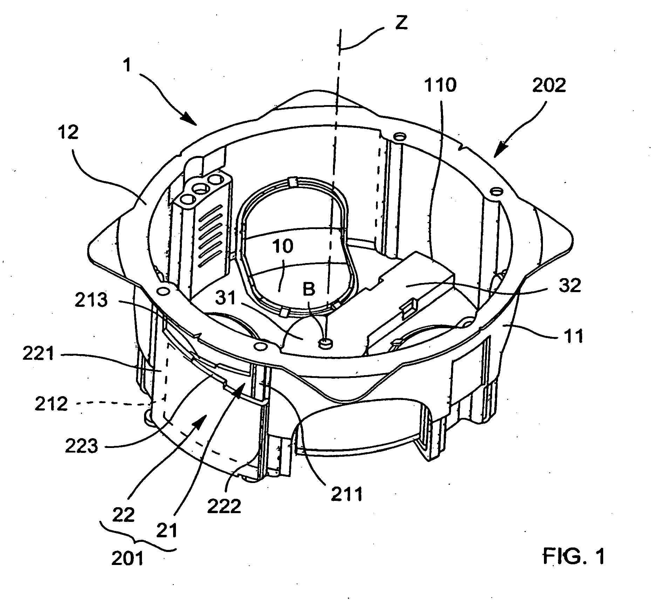

Par ailleurs, comme le montrent les figures 1 et 2, le bord frontal 213 du volet 21, c'est-à-dire le bord de ce volet qui est distant du fond 10 de la boîte 1 et qui relie le bord lié 211 au bord libre 212, s'étend suivant une direction oblique et se rapproche du fond 10 de la boîte 1 à distance croissante du bord lié 211.

De même, le bord frontal 223 du volet 22, c'est-à-dire le bord qui est distant du fond 10 de la boîte 1 et qui relie le bord lié 221 au bord libre 222, s'étend suivant une direction oblique et se rapproche du fond 10 de la boîte 1 à distance croissante du bord lié 221.

Ces bords frontaux 213 et 223 peuvent en outre être conformés en gradins pour présenter un dénivelé global relativement important, tout en présentant localement une pente relativement douce.

Comme le montrent le mieux les figures 1 et 3, le dispositif de l'invention peut présenter plus d'une paire 201 de volets.

En particulier, ce dispositif peut comprendre une deuxième paire 202 de volets, conformée comme la première paire 201 de volets, c'est-à-dire formée de volets 21 et 22, ces deux paires de volets étant disposées de manière diamétralement opposées l'une de l'autre par rapport à l'axe central Z.

Dans ce cas, la paroi 11 est percée de deux ouvertures 110 diamétralement opposées, et la cartouche 31 est reliée à chacune de ces ouvertures par un canal 32 correspondant.

Comme le comprendra l'homme du métier à la lecture de la présente description, l'énergie nécessaire à l'ouverture du volet 21 ou des volets 21 et 22 peut être fournie par une mousse expansive remplissant en outre la fonction d'un agent de scellement chimique, propre à fixer la boîte 1 dans son logement.
Rien cependant ne s'oppose notamment à ce que cette énergie ne soit transmise au volet que de façon indirecte.

En particulier, il est possible de prévoir, dans chacun des canaux 32, un piston transmettant au volet 21 la poussée exercée par la mousse 30, ce piston étant ouvert ou éjecté hors de l'ouverture 110, une fois le volet 21 ouvert ou partiellement ouvert, pour laisser la mousse 30 sortir du canal 32 et de l'ouverture 110.

## Revendications

1. Dispositif de montage pour appareillage électrique, ce dispositif comprenant une boîte d'encastrement (1) destinée à être insérée dans un logement, et des moyens de fixation (201, 3) propres à assurer un ancrage de la boîte (1) dans le logement, cette boite comprenant au moins un fond (10) et une paroi latérale (11) se raccordant au fond et s'étendant autour d'un axe central (Z), les moyens de fixation (201, 3) comprenant au moins un premier volet (21) et des moyens de sollicitation (3), le premier volet (21) présentant une face interne appliquée sur une face externe de la paroi latérale (11) de la boîte (1) dans un état de repos du dispositif, et un bord lié (211) monté pivotant sur cette paroi (11), et les moyens de sollicitation (3) faisant sélectivement pivoter le premier volet (21), en réponse à un déclenchement du dispositif, dans un sens propre à éloigner de l'axe central (Z) un bord libre (212) de ce premier volet (21), **caractérisé en ce que** les moyens de sollicitation (3) comprennent une substance de scellement (30) qui, dans l'état de repos du dispositif, est confinée dans la boîte (1) et qui, au déclenchement du dispositif, est sélectivement projetée sous pression sur la face interne du premier volet (21).

2. Dispositif suivant la revendication 1, **caractérisé en ce que** la paroi (11) de la boîte (1) présente une ouverture (110) en regard de la face interne du premier volet (21), et **en ce qu'**au déclenchement du dispositif, la substance de scellement (30) est canalisée pour traverser l'ouverture (110).

3. Dispositif suivant l'une quelconque des revendications précédentes, **caractérisé en ce qu'**il comprend un deuxième volet (22) appliqué sur le premier volet (21) dans l'état de repos du dispositif, formant avec le premier volet (21) une première paire (201) de volets, et présentant un bord lié (221) et un bord libre (222), **en ce que** le bord lié (211, 221) de chacun des premier et deuxième volets (21, 22) est relativement distant du bord lié (221, 211) et relativement proche du bord libre (222, 212) de l'autre volet (22, 21) dans l'état de repos du dispositif, et **en ce que** le deuxième volet (22) est monté pivotant sur la paroi latérale (11) de la boite (1) par son bord lié (221), parallèlement au bord lié (211) du premier volet (21), le pivotement du deuxième volet (22) résultant du pivotement du premier volet (21) et de l'appui du premier volet (21) sur ce deuxième volet (22), et le bord libre (222) du deuxième volet (22) présentant un rebord (222r) formant butée pour le bord libre (212) du premier volet (21).

4. Dispositif suivant l'une quelconque des revendications précédentes, **caractérisé en ce que** chaque volet (21, 22) présente, à distance du fond (10) de la boite (1), un bord frontal (213, 223) s'étendant obliquement, depuis le bord lié (211, 221) de ce volet (21, 22) jusqu'au bord libre (212, 222) de ce volet (21, 22), en se rapprochant du fond (10) de cette boite (1).

5. Dispositif suivant la revendication 4, **caractérisé en ce que** le bord frontal (213, 223) de chaque volet (21, 22) est conformé en gradins.

6. Dispositif suivant l'une quelconque des revendications précédentes combinée à la revendication 3, **caractérisé en ce qu'**il comprend au moins une paire supplémentaire (202) de volets, conformée comme la première paire (201) de volets.

7. Dispositif suivant la revendication 6, **caractérisé en ce qu'**il comprend deux paires (201, 202) de volets diamétralement opposées l'une de l'autre par rapport à l'axe central (Z).

8. Dispositif suivant l'une quelconque des revendications précédentes, **caractérisé en ce que** la substance de scellement (30) est constituée par une mousse expansive.

9. Dispositif suivant les revendications 2 et 8, **caractérisé en ce qu'**il comprend une cartouche de mousse (31) disposée dans le fond (10) de la boite (1) et au moins reliée à ladite ouverture (110) par un canal (32) propre, au déclenchement du dispositif, à guider à travers l'ouverture (110) la mousse expansive (30) délivrée par la cartouche (31) en réponse à un déclenchement.

## Claims

1. A device for installing an electrical fitting, said fitting consisting of a flush-fitting box (1) designed to be inserted in a housing, and appropriate fixing means (201, 3) for ensuring anchoring of the box (1) in the housing, said box consisting of at least a base (10) and a side wall (11) joining up with the base and extending about a central axis (Z), the fixing means (201, 3) consisting of at least a first flap (21) and biasing means (3), the first flap (21) having an inner face applied to an outer face of the side wall (11) of the box (1) in a resting state of the device and having an attached edge (211) pivot-mounted on said wall (11), and the biasing means (3) selectively causing the first flap (21) to pivot, in response to triggering of the device, in a direction calculated to move a free edge (212) of said first flap (21) away from the central axis (Z), **characterized in that** the biasing means (3) comprise a sealing substance (30) which, in the resting state of the device, is confined in the box (1) and which, on triggering of the device, is selectively forced out under pressure onto the inner face of the first flap (21).

2. A device according to Claim 1, **characterized in that** the wall (11) of the box (1) has an opening (110) opposite the inner face of the first flap (21), **and in that**, on triggering of the device, the sealing substance (30) is guided through a channel so as to pass through said opening (110).

3. A device according to either one of the preceding claims, **characterized in that** it has a second flap (22) applied to the first flap (21) in the resting state of the device, forming together with the first flap (21) a first pair (201) of flaps, and having an attached edge (221) and a free edge (222), **in that** the attached edge (211, 221) of each of the first and second flaps (21, 22) is relatively far from the attached edge (221, 211) and relatively close to the free edge (222, 212) of the other flap (22, 21) in the resting state of the device, **and in that** the second flap (22) is pivot-mounted on the side wall (11) of the box (1) by its attached edge (221), parallel to the attached edge (211) of the first flap (21), the pivoting of the second flap (22) being the result of pivoting of the first flap (21) and pressing of the first flap (21) against said second flap (22), and the free edge (222) of the second flap (22) having a flange (222r) forming a stop for the free edge (212) of the first flap (21).

4. A device according to any one of the preceding claims, **characterized in that** each flap (21, 22) has, at a distance from the base (10) of the box (1), a front edge (213, 223) extending at an angle from the attached edge (211, 221) of said flap (21, 22) to the free edge (212, 222) of said flap (21, 22) and extending towards the base (10) of said box (1).

5. A device according to Claim 4, **characterized in that** the front edge (213, 223) of each flap (21, 22) is formed in steps.

6. A device according to any one of the preceding claims combined with Claim 3, **characterized in that** it has at least one additional pair (202) of flaps, formed in the same way as the first pair (201) of flaps.

7. A device according to Claim 6, **characterized in that** it has two pairs (201, 202) of flaps located diametrically opposite one another relative to the central axis (Z).

8. A device according to any one of the preceding claims, **characterized in that** the sealing substance (30) consists of expanding foam.

9. A device according to Claims 2 and 8, **characterized in that** it has a cartridge of foam (31) disposed in the base (10) of the box (1) and at least connected to said opening (110) by a channel (32) suitable, on triggering of the device, for guiding the expanding foam (30) dispensed by the cartridge (31) through the opening (110) in response to triggering of the device.

## Patentansprüche

1. Vorrichtung zum Montieren eines elektrischen Geräts, wobei dieses Gerät aufweist: eine Wanddose (1) zum Einsetzen in einen Sitz und Befestigungsmittel (201, 3), die geeignet sind, eine Verankerung der Dose (1) im Sitz zu gewährleisten, wobei diese Dose mindestens einen Boden (10) und eine Seitenwand (11), die sich an den Boden anschließt und rings um eine Mittelachse (Z) erstreckt, aufweist, die Befestigungsmittel (201, 3) mindestens einen ersten Flügel (21) und Verstellmittel (3) aufweisen, der erste Flügel (21) eine Innenseite aufweist, die sich in einem Ruhezustand der Vorrichtung gegen eine Außenseite der Seitenwand (11) der Dose (1) anlegt, und ein verbundener Rand (211) an dieser Wand (11) schwenkbar montiert ist, und das Verstellmittel (3) den ersten Flügel (21) bei einem Auslösen der Vorrichtung selektiv in einer Richtung schwenkt, in der sich ein freier Rand (212) dieses ersten Flügels (21) von der Mittelachse (Z) entfernt, **dadurch gekennzeichnet, dass** das Verstellmittel (3) eine Versiegelungssubstanz (30) aufweist, die im Ruhezustand der Vorrichtung in der Dose (1) eingeschlossen ist und die beim Auslösen der Vorrichtung selektiv unter Druck auf die Innenseite des ersten Flügels (21) gespritzt wird.

2. Vorrichtung nach Anspruch 1, **dadurch gekennzeichnet, dass** die Wand (11) der Dose (1) eine Öffnung (110) gegenüber der Innenseite des ersten Flügels (21) aufweist, und dass beim Auslösen der Vorrichtung die Versiegelungssubstanz (30) so geleitet wird, dass sie die Öffnung (110) durchfließt.

3. Vorrichtung nach einem der vorangehenden Ansprüche, **dadurch gekennzeichnet, dass** sie einen zweiten Flügel (22) aufweist, der im Ruhezustand der Vorrichtung auf dem ersten Flügel (21) anliegt, mit dem ersten Flügel (21) ein erstes Paar (201) von Flügeln bildet und einen verbundenen Rand (221) und einen freien Rand (222) aufweist, wobei im Ruhezustand der Vorrichtung der verbundene Rand (211, 221) jedes des ersten und zweiten Flügels (21, 22) verhältnismäßig entfernt vom verbundenen Rand (221, 211) und verhältnismäßig nahe beim freien Rand (222, 212) des anderen Flügels (22, 21) ist, und der zweite Flügel (22) an der Seitenwand (11) der Dose (1) mit seinem verbundenen Rand (221) parallel zum verbundenen Rand (211) des ersten Flügels (21) schwenkbar montiert ist, wobei das Schwenken des zweiten Flügels (22) aus dem Schwenken des ersten Flügels (21) und dem Andruck des ersten Flügels (21) gegen den zweiten Flügel (22) resultiert, und der freie Rand (222) des zweiten Flügels (22) eine Krempe (222r) aufweist, die einen Anschlag für den freien Rand (212) des ersten Flügels (21) bildet.

4. Vorrichtung nach einem der vorangehenden Ansprüche, **dadurch gekennzeichnet, dass** jeder Flügel (21, 22) in einem Abstand vom Boden (10) der Dose (1) einen frontalen Rand (213, 223) aufweist, der sich schräg vom verbundenen Rand (211, 221) dieses Flügels (21, 22) bis zum freien Rand (212, 222) dieses Flügels (21, 22) erstreckt, wobei er sich dem Boden (10) dieser Dose (1) annähert.

5. Vorrichtung nach Anspruch 4, **dadurch gekennzeichnet, dass** der frontale Rand (213, 223) jedes Flügels (21, 22) stufenförmig ausgebildet ist.

6. Vorrichtung nach einem der vorangehenden Ansprüche in Verbindung mit Anspruch 3, **dadurch gekennzeichnet, dass** sie mindestens ein zusätzliches Paar (202) von Flügeln aufweist, die wie das erste Paar (201) von Flügeln gebildet sind.

7. Vorrichtung nach Anspruch 6, **dadurch gekennzeichnet, dass** sie zwei Paare (201, 202) von Flügeln aufweist, die zueinander mit Bezug auf die Mittelachse (Z) diametral entgegengesetzt sind.

8. Vorrichtung nach einem der vorangehenden Ansprüche, **dadurch gekennzeichnet, dass** die Versiegelungssubstanz (30) aus einem expandierenden Schaum besteht.

9. Vorrichtung nach den Ansprüche 2 und 8, **dadurch gekennzeichnet, dass** sie eine Schaumkartusche (31) aufweist, die im Boden (10) der Dose (1) angeordnet und mindestens mit der Öffnung (110) durch einen Kanal (32) verbunden ist, der geeignet ist, beim Auslösen der Vorrichtung den von der Kartusche (31) beim Auslösen gelieferten expandierenden Schaum (30) durch die Öffnung (110) zu leiten.
